Europäisches Patentamt

European Patent Office

Office européen des brevets

(11) Publication number: **0 055 080**
A2

# (12) EUROPEAN PATENT APPLICATION

(21) Application number: 81305923.5

(22) Date of filing: 17.12.81

(51) Int. Cl.³: **B 29 H 5/28**, B 29 F 3/08

(30) Priority: 18.12.80 GB 8040488
15.01.81 GB 8101266

(43) Date of publication of application: 30.06.82
Bulletin 82/26

(84) Designated Contracting States: AT CH DE FR GB IT LI

(71) Applicant: **GENERAL ENGINEERING RADCLIFFE 1979 LIMITED, Bury Road, Radcliffe Manchester, M26 9UR (GB)**

(72) Inventor: **Hill, Alan Harvey, 24 Sabden Close, Bury Lancashire (GB)**

(74) Representative: **Downey, William Gerrard et al, WILSON GUNN & ELLIS 41 Royal Exchange Cross Street, Manchester, M2 7DB (GB)**

(54) **A method of and apparatus for curing.**

(57) In a method of and apparatus for curing the outer surface of hose, the hose (119 to 122) is fed to a curing chamber (30). Hot liquid salt as the curing medium is circulated through the chamber (30) as the hose (119 to 122) passes through. After emerging from the chamber the cured hose (119 to 122) passes to a cooling section (4), through which water is circulated to cool the hose, and thence to a haul-off and winding-up section (5). The hose is positively directed at the entrance to the chamber (30) by means of two rollers (102 and 103) which may be so spaced and to apply an embossing pressure to the uncured surface of the hose as it passes through. Skids (100) are provided on the roof and skids (101) on the base of the chamber to support the hose as it moves through the chamber. In this way the production of hose embossed with, for example, a trade mark may be facilitated and the hose guided along a substantially linear path to reduce hose curvature. Further, the apparatus caters for both sinkers, where the specific gravity of the hose is greater than that of the salt and floaters, where the specific gravity of the hose is less than that of the salt.

-1-

## A METHOD OF AND APPARATUS FOR CURING

The present invention relates to a method of and apparatus for curing the outer curable surface of an elongate flexible member.

In the older methods of curing, such members were normally wound around a drum and cured in a wound position. However, not only did this method put a permanent curved set into the member, it also necessitated the member to be taped or otherwise covered before curing to prevent contact between adjacent turns. In more recent methods of curing the member is drawn continuously through an elongate vulcanisation chamber. During curing, as the curable material passes through the chamber contact may occur between the walls of the chamber and the uncured material and it has been found that such contact can result in damage. One way of avoiding such damage is to eliminate the contact between the chamber walls and uncured material and such a solution is described in U.K. Patent No. 1,342,342 to Winster Hose Limited. Thus in Winster the vulcanisation apparatus is constructed and arranged so that the uncured outer part of the material to be cured does not contact any non-fluid body. Such a solution, whilst achievable in practice, imposes geometrical requirements on the vulcanisation apparatus which are difficult and expensive to meet.

According to one aspect of the present invention, there

-2-

is provided a method of continuously curing the outer curable surface of an elongate flexible member including the steps of feeding the member towards a curing chamber containing a hot liquid curing medium under pressure, positively directing the member down the chamber by passing the member over a roller substantially on entering the chamber, supporting the member on at least one support during its passage through the chamber and cooling the member after withdrawing it from the chamber.

According to another aspect of the present invention, there is provided apparatus for continuously curing the outer curable surface of an elongate flexible member comprising a conduit defining a curing chamber, means for circulating a hot liquid curing medium through the chamber, means for pressurising the hot liquid curing medium in the chamber, means for cooling the flexible member downstream of the curing chamber, a guide in the form of a rotatably mounted roller for positively guiding the flexible member as it enters the chamber and at least one support in the body of the chamber for supporting the member as it passes therethrough.

In order that the invention may be more clearly understood, one embodiment thereof will now be described by way of example, with reference to the accompanying drawings, in which:-

Figure 1 shows diagrammatically and partially broken away apparatus for continuously curing the outer curable surface of a reinforced hose in accordance with the invention, and

Figure 2 shows a detail view of the leading end of the hose at start up.

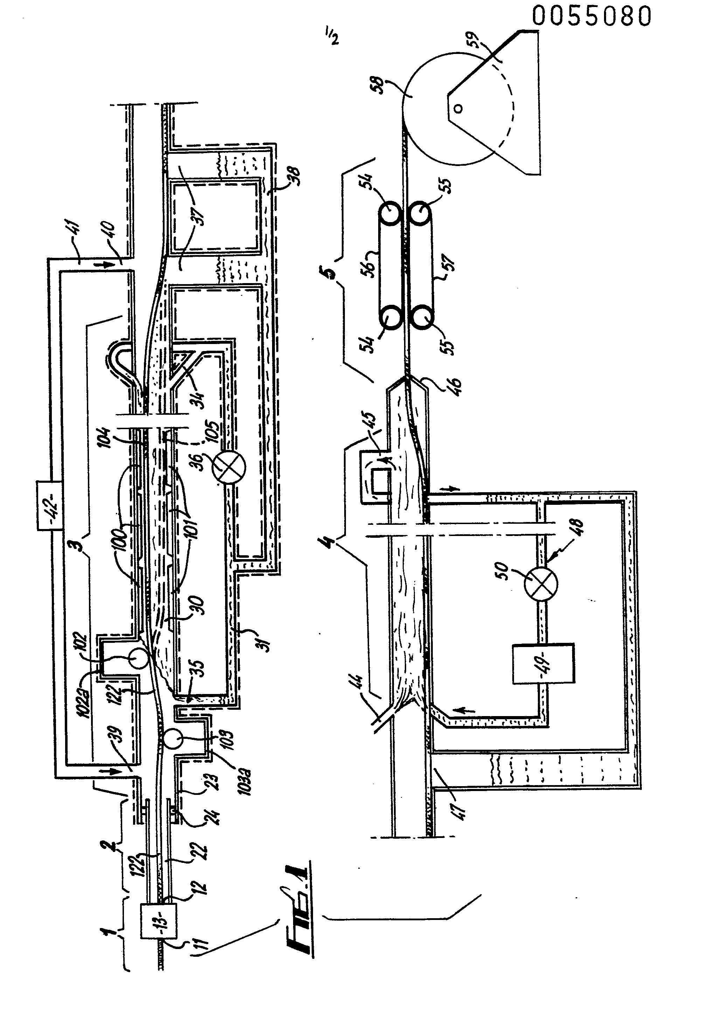

Referring to Figure 1 the apparatus may be considered as comprising in turn an extruder section 1, start up section 2, vulcanising or curing section 3, cooling section 4 and haul-off and winding-up section 5.

The extruder section 1 comprises an inlet 11 and 12 disposed on opposite sides respectively of a conventional die head 13. The outlet 12 is connected to the start up section 2. This start up section 2 comprises a telescopic section in which an inner section 22 is slidably mounted within an outer section 23. A fluid seal 24 is disposed between the outer section 23 and inner section 22. The outer section 23 defines the vulcanisation or curing chamber 30 of the vulcanisation or curing section 3.

The chamber 30 is elongate and has a conical inlet 34 leading into it for the supply of a curing medium in the form of a hot liquid salt. The salt is a eutectic mixture of inorganic salts such as sodium and potassium

0055080

-4-

nitrates and nitrites, which mixture is stable in the liquid phase over a temperature range of $150^{\circ}$ to $400^{\circ}C$. The preferred salt has a melting point of $140^{\circ}C$ and all passages through which it flows during operation of the apparatus are heated to prevent solidification. All heated passages are indicated in the drawing by a broken line running adjacent thereto. The attitude of the chamber 34 is such that salt tends to flow back under gravity along the chamber in the direction of forward movement of the member being cured. To counteract this tendency the salt is pumped up along the chamber 30 overflows at the end 35 of the chamber 30 and is recirculated _via_ a recirculatory path 31 which contains the pump 36 and is connected at its other end to the inlet 34. Salt drains 37 are provided downstream of the inlet 34 such that any salt escaping in this direction may be returned via the return duct 38 to the chamber 30.

The salt is air pressurised in the chamber 30. For this purpose air inlets 39 and 40 are disposed at opposite ends respectively of the chamber 30. These inlets are connected to an air pressurisation system 41 comprising an air compressor 42. The preferred operating pressure is 80 psi or 5 bar. The pressure is of course substantially equal at both inlets 39 and 40 so that the salt mass is not subject to any resultant force due to this pressure

-5-

in any direction.

Cooling section 4 is defined by an extension of the chamber 30. This section 4 has a conical water inlet 44 leading into it and a water outlet 45 leading from it. That end of the section 4 remote from the inlet 44 is provided with a seal 46 to prevent egress of water from the section 4 at that end. The other end of the section 4 is provided with a water drain 47 so that any water flowing back upstream from the inlet may drain away. A water recirculation circuit 48 is provided comprising a heat exchanger 49 and pump 50. Thus water pumped along the section 4 from inlet 44 to outlet 45 removes heat from the curing material and then expells it in the exchanger 49.

On exit from section 4, the member passes to a haul-off device 5 and thence to a wind-up drum around which the cured member can be wound for storage. The haul-off device comprises two pairs of rollers 54 and 55 which respectively support friction belts 56 and 57 between which the member is gripped, and the wind-up drum comprises a drum 58 removably and rotatably disposed in a support.

The vulcanisation or curing chamber includes a series

-6-

of skids 100 arranged along the upper wall of the chamber and a series of skids 101 arranged along the lower wall of the chamber. The upper skids 100 serve to provide a solid low friction surface along which the uncured member can slide without damage during curing when the specific gravity of the member is such that it floats in or on the salts in the chamber. The lower skids 101 serve to provide a solid low friction surface along which the uncured member being cured can slide when the specific gravity of the member is such that it sinks in the salts in the chamber. Additionally, two guide rollers 102 and 103 are rotatably mounted at or near the entrance to the vulcanisation chamber to direct the member to be cured down the chamber. The rollers 102 and 103 are provided with respective inspection chambers 102a and 103a. If desired, the rollers can be arranged to apply more pressure to the uncured surface of the member than might otherwise be desirable in order that some form of mark such as a trade mark, for example, can be impressed thereon. Otherwise an impression into the uncured surface of the member is minimal due to the positioning and rotatability of the rollers 102 and 103.

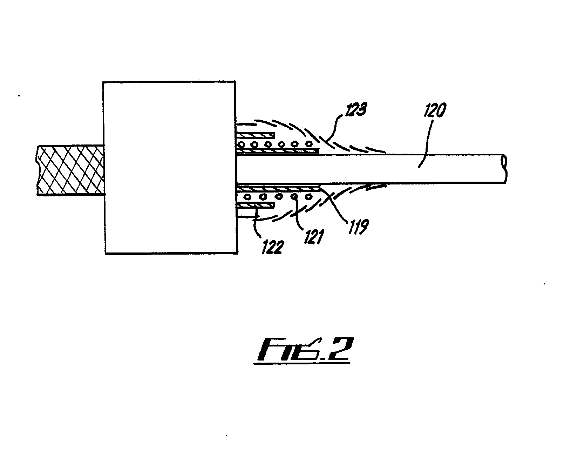

The above described apparatus may be employed for example to provide and cure the outer surface of reinforced hose or provide and cure the insulation in a

-7-

conductor. The curable material may be natural rubber, SBR, polychloroprene, nitrile rubbers, estereo-elastomers (such as polyisoprene and polybutadiende 1.4 cis) cross-linkable polyethylene or polypropylene and cross-linkable copolymers of ethylene and propylene and the like. In these and other cases special precautions need to be taken at start up. Referring to Figure 2, which shows the start up procedure for a reinforced hose, the inner layer 119 of the hose directly surrounds a long flexible mandrel 120. This layer 119 is itself surrounded by a layer 121 of plaited reinforcement, usually of metal. The outer layer 122 of curable material is extruded over the reinforcement layer 121. Tape 123 is wound round the exposed leading edges of these layers so that when the chamber is pressurised air cannot force these layers away from the mandrel. The mandrel is then pulled through the apparatus to the other end by the device 5 after the chamber 20 has been pressurised, the hot salts circulated to the section 3 and the cool water circulated to the section 4 to initiate the continuous vulcanisation and cooling process.

It will be appreciated that during vulcanisation the elongate member will usually follow either the path shown in full line and referenced 104 in Figure 1 or the path shown in dotted line and referenced 105 in Figure 1.

-8-

through the vulcanisation chamber 30. When following path 104 the member, which is floating due to its lower specific gravity relative to the curing salts in which it is immersed, will normally contact both rollers 102 and 103 and also the upper skids 100. When following the path 105 the member, which sinks due to its higher specific gravity relative to the curing salts in which it is immersed, will normally contact only the roller 103 and also the lower skids 101. In both cases the member is guided through the chamber 30 along a substantially linear path. Thus not only are "sinkers" and "floaters" catered for in the same apparatus giving great flexibility in the choice of curing medium relative to the material being cured, but the linear path followed itself enables the member to be cured with negligible curvature set in and the control of tension to be facilitated.

It will also be appreciated that the inner layer 119 of the hose is simultaneously cured with t he outer layer 122.

## CLAIMS

1. A method of continuously curing the outer curable surface (122) of an elongate flexible member (119 to 122) including the steps of feeding the member (119 to 122) towards a curing chamber (30) containing a hot liquid curing medium under pressure, moving the member down the chamber (30) so that it contacts the curing medium therein, the outer surface (122) thereof thereby being cured, and cooling the member (119 to 122) after withdrawing it from the chamber characterised in that the member (119 to 122) is positively directed down the chamber by passing the member over a roller (102, 103) substantially on entering the chamber (30) and is supported on at least one support (100, 101) during its passage through the chamber (30).

2. A method as claimed in claim 1, in which the hot liquid curing medium into which the member (119 to 122) is fed is liquid salt.

3. A method as claimed in claim 1 or claim 2, in which the outer curable surface (122) of the elongate flexible member (119 to 122) is embossed by the roller (102, 103).

4. A method as claimed in Claim 1, 2 or 3, in which the elongate flexible member is supported on skids as it moves down the chamber.

5. A method as claimed in Claim 4, in which the curing medium has a higher specific gravity than elongate flexible member (119 to 122) and the member is supported on skids disposed bellow the member as it moves down the chamber (30).

6. A method as claimed in Claim 4, in which the curing medium has a lower specific gravity than the elongate flexible member (119 to 122) and the member is supported on skids disposed above the member as it moves down the chamber (30).

7. Apparatus for continuously curing the outer curable surface (122) of an elongate flexible member (119 to 122) comprising a conduit defining a curing chamber (30), means (36) for circulating a hot liquid curing medium through the chamber (30) means (42) for pressurising the hot liquid curing medium in the chamber, and means (4) for cooling the flexible member (119 to 122) downstream of the curing chamber (30) characterised by a guide in the form of a rotatably mounted roller (102, 103) for positively guiding the elongate flexible member as it enters the chamber (30) and at least one support (100, 101) in the body of the chamber (30) for supporting the elongate flexible member as it passes through the chamber.

8. Apparatus as claimed in Claim 7, in which there is a supply of hot liquid curing medium and this medium is

-11-

liquid salt.

9. Apparatus as claimed in Claim 7 or claim 8, in which the roller (102, 103) is an embossing roller.

10. Apparatus as claimed in Claim 7, 8 or 9, in which the or each support comprises a skid (100, 101).

11 . Apparatus as claimed in Claim 10, in which the or each skid (100) is disposed on the roof of the chamber.

12. Apparatus as claimed in claim 11, in which the or each skid (101) is disposed on the base of the chamber (30).

FIG.1

*FIG.2*